Europäisches Patentamt

European Patent Office

Office européen des brevets

(11) Veröffentlichungsnummer: **0 230 477**
**A1**

(12) **EUROPÄISCHE PATENTANMELDUNG**

(21) Anmeldenummer: 85116563.9

(22) Anmeldetag: 24.12.85

(51) Int. Cl.⁴: **G05D 16/20** , F16K 31/08

(43) Veröffentlichungstag der Anmeldung:
**05.08.87 Patentblatt 87/32**

(84) Benannte Vertragsstaaten:
**AT BE CH DE FR GB IT LI LU NL SE**

(71) Anmelder: **Regiotech SA**
**Chemin des Primevères 12**
**CH-1701 Fribourg(CH)**

(72) Erfinder: **Charton, Jean Claude**
**Rochettes**
**CH-2072 Saint Blaise(CH)**

(54) **Gasdruckregler.**

(57) Ein Gasdruckregler mit einem Servoregler (20) enthält zur Erzeugung eines vorgegebenen Steuerdruckes auf die Reglermembran (29) des Servoreglers eine Tauchspule (2I) einer Steuerdruckeinrichtung (30). Die Tauchspule ist in einem Polschlitz - (22) eines Dauermagneten (23) eingetaucht. In einem anderen Fall enthält die Steuerdruckeinrichtung anstelle der Tauchspule eine Steuerdruckmembran, die von dem einstellbaren Druck eines steuernden Mediums in einer Steuerdruckkammer beeinflußt wird und über ein starres Verbindungsglied auf die Servoreglermembran einwirkt.

Fig. 1

EP 0 230 477 A1

## Gasdruckregler

Die Erfindung betrifft einen Gasdruckregler der im Oberbegriff des Anspruches I oder 5 angegebenen Art.

Gasdruckregler zur Regelung des Druckes oder des Flusses eines gasförmigen Mediums enthalten in vielen Fällen einen Servoregler, der dazu dient, den Arbeitsdruck in einer Arbeitsdruckkammer des Gasdruckreglers zu regeln. Über den Druck in der Arbeitsdruckkammer erfolgt dann der Stellvorgang auf das Stellglied des Druckreglers mit erheblich größerer Krafteinwirkung als der von dem Servoregler aufzubringenden Kraft. Damit der Servoregler die Regelung durchführen kann, ist an den Servoregler eine Steuerdurckeinrichtung angeschlossen, die einen Steuerdruck oder eine Steuerkraft auf die Reglermembran des Servoreglers überträgt.

Im einfachsten Fall enthält die Steuerdruckeinrichtung eine Druckfeder, die sich im Gehäuse der Steuerdruckeinrichtung gegen die Membran des Dervorglers abstützt und deren Federdurck die Steuerkraft auf die Membran des Servoreglers darstellt. Aus der DE-OS 334556l ist es bekannt, diese Feder in einer Einstellschraube zu lagern, die in einem Gewinde des Gehäuses gelagert ist und mit der die Steuerdraft auf die Membran des Servoreglers eingestellt werden kann. Hierdurch wird es möglich, den bekannten Gasdruckregler auf die Regelung eines bestimmten Gasdruckes einzustellen.

Bei einem ebenfalls aus der DE-OS 334556l der Anmelderin bekannten Gasdruckregler ist die sich auf der Membran des Servoreglers abstützende Druckfeder im Anker eines Elektromagneten der an den Servoregler angeflanschten Steuerdruckeinrichtung gelagert. Der elektrische Strom durch die Spule des Elektromagneten bestimmt die Steuerkraft auf die Membran des Servoreglers und damit den Schließdruck des Schließgliedes auf den Ausgang der Stelldurck-Steuerlietung von der Stelldruckarbeitskammer des Gasdruckreglers. Das Schließglied gibt den Gasgang der Stelldrucksteuerleitung so lange frei, solange der Stelldruck in der Stelldruck-Arbeitskammer größer ist als der Schließdruck des Schließgliedes.

Zur Aufbringung eines bestimmten, erforderlichen Schließdruckes benötigt die Spule des Elektromagneten der bekannten Steuerdruckeinrichtung eine erhebliche elektrische Leistung, die nicht nur als störende Wärmeverlustleistung in den Gasdruckregler auftritt, sondern die auch von dem den Gasdruckregler steuernden Umsetzergerät eine besondere Leistungsstufe zur Aufbringung der geforderten hohen Steuerleistung verlangt.

Der Erfindung liegt die Aufgabe zugrunde, zur Erzeugung des Steuerdruckes oder der Steuerkraft auf die Membran des Servoreglers eines Gasdruckreglers eine Steuerdruckeinrichtung bereitzustellen, die eine leichte Anpassung des Steuerdruckes oder der Steuerkraft an vorgegebene Regelbedingungen erlaubt und die keine hohe Steuerleistung erfordert. Diese Aufgabe wird durch die im kennzeichnenden Teil des Anspruches I oder 5 angegebenen Maßnahmen in vorteilhafter Weise erfindungsgemäß gelöst.

In einem Fall ensteht infolge der hohen Magnetkräfte des Dauermagneten und einer geeigneten Polführung und Ausbildung des Polschlitzes ein derart hohes Magnetfeld im Polschlitz , daß eine gegenüber dem bisherigen Stand der Technik um Größenordnungen kleinere Steuerleistung ausreicht, den erforderlichen Schließdruck auf den Ausgang der Stelldrucksteuerleitung aufzubringen. Da der Träger der Tauchspule aus einem leichten, magnetisch nicht-leitenden Material bestehen kann, sind keine großen Massen zu bewegen. Wegen des hohen Magnetfeldes in den Polschlitzen wird die Tauchspule so stark gedämpft, daß praktisch keine Regelschwingungen auftreten. Außerdem kann die Tauchspule ohne aufwendige Anpaßschaltungen unmittelbar von einer Mikroprozessorvorschaltung eingestellt und festgestellt werden.

Bei einem Gasdruckregler nach Anspruch 5 ist ohne die Verwendung aufwendiger und damit störanfälliger und die Herstellung des Gasdruckreglers verteuernder Übersetzungsglieder eine Verhältnisregelung in einem weiten Gasdruckbereich möglich. Mit den Maßnahmen des Anspruchs 6 ist außerdem eine Einstellung des Druckverhältnisses in weiten Grenzen mit einfachen Mitteln möglich.

Die Unteransprüche kennzeichnen besonders vorteilhaft Ausgestaltungen der Erfindung.

Die Erfindung wird nachfolgend anhand vorteilhafter Ausführungsbeispiele näher erläutert. In den zugehörigen Zeichnungen zeigen:

Fig. I einen Gasdruckregler, teilweise im Schnitt dargestellt.

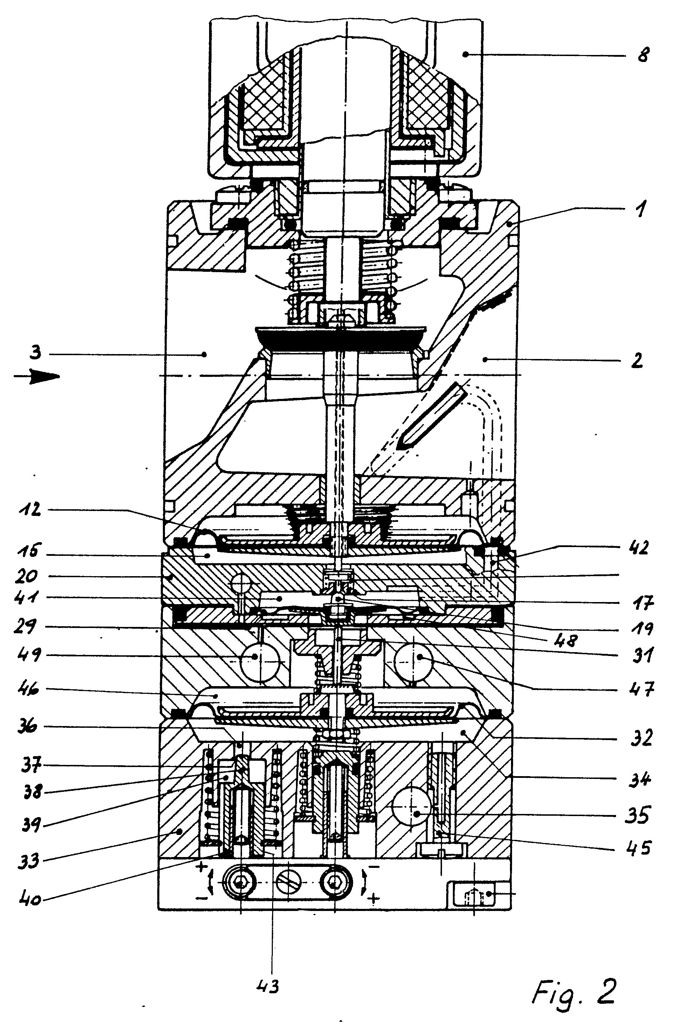

Fig. 2 einen weiteren Gasdruckregler, ebenfalls teilweise im schnitt dargestellt.

Ein in Fig. I größtenteils in einem Schnitt dargestellter Gasdruckregler enthält ein Stellteil I, das einen Auslaßraum 2 von einem Einlaßraum 3 für ein gasförmiges Medium durch ein Ventil 4 trennt. Eine Schließfeder 5 preßt einen Schließkörper 6 auf einen Ventilsitz 7 des Ventils, solange ein Elektromagnet 8 für die Ventilbetätigung nicht erregt ist. Im bestromten Zustand des Elektromagneten 8 ist der Anker 9 einschließlich des Federtellers 10 für die Schließfeder 5 angehoben, so daß der Schließkörper 6 von der Schließfeder getrennt ist und über eine an ihm befestigte Stange 11 als Stellglied wirken kann. An dem anderen Ende der Strange 11 ist eine Arbeitsmembran 12 befestigt, die mit den Wandungen 13 eines Reglergehäuses 14 eine Stelldruckarbeitskammer 15 bildet. In dem von der Schließfeder 5 freigegebenen Zustand ist die Stelldruckarbeitskammer 15 über eine die Stange 11 axial durchsetzende Bohrung 16 mit dem Einlaßraum 3 verbunden.

Gegenüber dem Ende der Stange 11 enthält der Boden der Stelldruckarbeitskammer 15 eine Düse 17, deren Ausgang 18 ein Schließglied 19 eines Servoreglers 20 gegenübersteht. Der Servoregler enthält als Stellelement für das Schließglied 19 eine Tauchspule 21 einer an den Servoregler angeflanschten Steuerdruckeinrichtung 30. Die Tauchspule 21 ist konzentrisch im ringförmigen Polschlitz 22 eines ringförmigen Dauermagneten 23 angeordnet. Dieser Polschlitz 22 wird von einer ebenfalls ringförmigen Polplatte 24 als dem einen Polschuh und einer magnetisch leitenden Kreisplatte 25 mit konzentrisch aufgesetztem säulenförmigen Polkern 26 als dem zweiten Pol schuh gebildet. Der Träger 28 der Tauchspule 21 ist in einer Bohrung 27 des Polkerns 26 axial geführt.

Wird die Tauchspule 21 über nicht näher dargestellte Mittel bestromt, versucht sie sich bei richtiger Stromrichtung in Richtung auf die Arbeitsdruckkammer 15 aus dem Magnetfeld im Polschlitz 22 herauszuheben, und legt dadurch das Schließglied 19 mit einer Anpreßkraft vor den Ausgang 18 der Düse 17, die von der Größe des die Tauchspule durchfließenden Stromes bestimmt ist. Ist die durch den Druck in der Meßkammer 41 erzeugte Kraft auf die Servoreglermembran 29 größer als die von der Tauchspule erzeugte Kraft, wird das Schießglied vom Ausgang 18 der Düse 17 abgehoben. Im Gleichgewichtszustand, d. h. im eingeregelten Zustand des Regelventils, entweicht durch die Düse 17 der Anteil des Mediums in der Stelldruckarbeitskammer 15, der dieser über die Bohrung 16 der Stange 11 aus dem Einlaßraum 3 zugeführt wird. Für die am Ausgang 18 der Düse 17 aufzubringenden Anpreßkräfte des Schließgliedes 19 des Servoreglers 20 sind nur verhältnismäßig kleine Ströme erforderlich, die ohne zusätzliche Leistungsverstärkung von beispielsweise von Mikroprozessoren gesteuerten Regelschaltungen aufgebracht werden können.

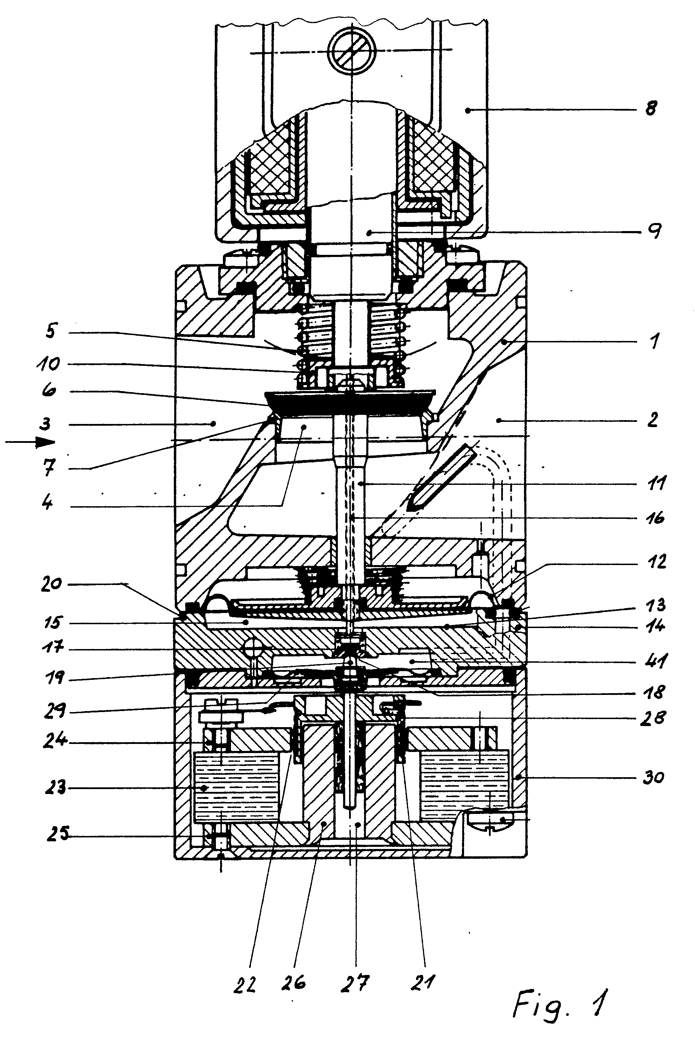

Der in Figur 2 in einer Schnittzeichnung dargestellte Gasdruckregler unterscheidet sich von dem in Figur 1 dargestellten Gasdruckregler im wesentlichen dadurch, daß auf seine Reglermembran 29 anstelle des Trägers einer Tauchspule über ein starres stiftförmiges Verbindungsglied 31 eine

Steuerdruckmembran 32 einer an den Servoregler 20 angeschlossenen Steuerdruckeinrichtung 33 einwirkt. Die Steuerdruckmembran 32 schließt eine Steuerdruckkammer 34 ab, die über eine Steuerdruckleitung 35 mit der Quelle eines Mediums verbunden ist, dessen Druck zur Steuerung des Servoreglers verwendet wird. Dieses Medium wird der Steuerdruckkammer über eine Düse 45 in der Steuerdruckleitung 35 zugeführt, so daß der Fluß des Mediums in der Druckstelle gedrosselt wird. Zur Einstellung des Steuerdruckes in der Steuerdruckkammer 34 enthält die Steuerdruckkammer eine Auslaßlietung 36, in deren Öffnung 37 der konisch geformte Dorne 38 eines in einer Bohrung 39 der Steuerdruckreinrichtung 33 geführten Gleitstückes 40 ragt. Der Dorn bestimmt nach Stellung des Gleitstückes 40 den Querschnitt der Öffnung 37 der Auslaßleitung und damit das Maß des Abflusses des Steuermediums aus der Steuerdruckkammer 34 der Steuerdruckeinrichtung 33.

Der Servoregler 20, dessen Messdruckkammer 41 im dargestellten Ausführungsbeispiel über eine Druckmeßleitung 42 mit dem Auslaßraum 2 des Gasdruckreglers verbunden ist, stellt zusammen mit der Steuerdruckkammer 34 der Steuerdruckeinrichtung 33 und dem die Servoreglermembran 29 mit der Steuerdruckmembran 32 verbindenden Verbindungsglied 31 einen Verhältnisregler dar, der den Druck im Auslaßraum 2 über den Stelldruck in der Stelldruckarbeitskammer 15 so steuert, daß er mit dem Steuerdruck ein gliechbleibendes Verhältnis bildet. Der Raum 46 ist über den Anschluß 47 mit der Atmosphäre verbunden. Der Raum 48 ist ebenfalls über einen Anschluß 49 mit der Atmosphäre verbunden. Dieses Verhältnis hängt einerseits vom Verhältnis der wirksamen Flächen der Servoreglermembran 29 und der Steuerdruckmembran 32 und andererseits vom Verhältnis des Zufluß -und Abflußquerschnitts für das steuernde Medium ab. Im dargestellten Ausführungsbeispiel weist die Steuerdruckmembran 32 etwa die vierfach wirksame Fläche der Servoreglermembran 29 auf. Dadurch kann das Verhältnis von Steuerdurck zu Meßdruck etwa zwischen 4 bis nahezu Null an dem Einstellelement 43 der Steuerdruckeinrichtung eingestellt werden.

## Ansprüche

1. Gasdruckregler
-mit einem vom Druck eines gasförmigen Mediums in einer Arbeitskammer gesteuerten Stellglied,
-mit einem über eine Stelldrucksteuerleitung an die Arbeitskammer angeschlossenen Servoregler, dessen Reglermembran ein Schließglied mit einer von der Reglermembran vorgegebenen Kraft gegen den Ausgang der von dem gasförmigen Medium aus der Arbeitskammer durchflossenen Stelldrucksteuerleitung legt,

-und mit einer Steuerdruckeinrichtung, die an der Reglermembran des Servoreglers die vorgegebene Kraft entgegen dem Ausgang der Stelldrucksteuerleitung erzeugt,

dadurch gekennzeichnet,

daß die Steuereinrichtung (30) eine Tauchspule - (2I) enthält,

-die über ein Verbindungsglied auf die Reglermembran (29) des Servoreglers (20) einwirkt

-und die in den Polschlitzen (22) eines mit Polschuhen (24, 26) versehenen Dauermagneten (23) geführt ist.

2. Gasdruckregler nach Anspruch I, dadurch gekennzeichnet, daß der Dauermagnet (23) ringförmig ist und daß der Polschlitz (22) von einer ringförmigen Polscheibe (24) gebildet ist, die einen säulenförmigen Polkern (26) konzentrisch zum Dauermagneten umgibt.

3. Gasdruckregler nach Anspruch I oder 2, dadurch gekennzeichnet,

daß das Verbindungsglied der Träger (28) der Tauchspule (2I) ist

und an der Reglermembran (29) des Servoreglers - (20) befestigt ist, anliegt.

4. Gasdruckregler nach einem der Ansprüche I bis 3,

dadurch gekennzeichnet,

daß der Träger (28) der Tauchspule (2I) in einer Bohrung (27) des Polkerns (26) geführt ist.

5. Gasdruckregler nach dem Oberbegriff des Anspruches I, dadurch gekennzeichnet,

-daß die Steuerdruckeinrichtung (33) eine Steuerdruckkammer (34) mit einer Steuerdurckmembran - (32) enthält,

-daß ein starres Verbindungsglied (3I) zwischen der Servoreglermembran (29) und der Steuerdruckmembran angeordnet ist, das die Stellkraft der Steuerdruckmembran auf die Servoreglermembran überträgt,

-daß die Steuerdruckleitung (35) zur Steuerdruckkammer eine Drosselstelle (45) zur Drosselung des Durchflusses des den Steuerdruck erzeugenden Mediums aufweist und

-daß an die Steuerdruckkammer eine Auslaßleitung (36) angeschlossen ist, deren Auslaßquerschnitt zur Einstellung des auf die Steuerdruckmembran wirkenden Steuerdurckes in der Steuerdruckkammer von einem verstellbaren Einstellelement (43) einstellbar ist.

6. Gasdruckregler nach Anspruch 5,

dadurch gekennzeichnet,

-daß die wirksame Fläche der Steuerdruckmembran (32) um ein vorgegebenes Maß größer ist als die wirksame Fläche der Servoreglermembran (29).

7. Gasdruckregler nach Anspruch 5 oder 6,

dadurch gekennzeichnet,

-daß das Einstellelement (43) ein in einem Gewinde oder in einer Bohrung (39) des Gehäuses der Steuerdruckeinrichtung (33) konzentrisch zur Auslaßleitung (36) geführtes Gewinde-oder Gleitstück ist, das einen an die Auslaßleitung ragenden konischen Dorn (38) enthält.

Fig. 1

0 230 477

Fig. 2

| | | | |
|---|---|---|---|

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 2 915 045 (MACKENZIE) <br><br> * Spalte 1, Zeile 60 - Spalte 2, Zeile 64; Spalte 3, Zeile 24 - Spalte 4, Zeile 42; Figur 1 * | 1,2,4 | G 05 D 16/20 <br> F 16 K 31/08 |
| A | -- | 3 | |
| X | DE - A - 1 523 486 (ECKARD AG) <br><br> * Seite 6, Zeilen 5-19; Seite 7; Zeilen 2-13; Seite 8, Zeile 6 - Seite 10, Zeile 19; Ansprüche 1-3; Figur 1 * | 1,2,4 | |
| A | -- | 3 | |
| Y | EP - A - 0 113 876 (HONEYWELL) <br><br> * Seite 2, Zeile 27 - Seite 4, Zeile 23; Figur 1 * <br> -- | 1-4 | |
| Y | PATENTS ABSTRACTS OF JAPAN, Band 8, Nr. 182 (M-319)(1619), 22. August 1984; & JP - A - 59 73 680 (MATSUSHITA) 25-04-1984 <br> -- | | |
| A | FR - A - 1 240.632 (WESTINGHOUSE) <br><br> * Seite 2, Zeilen 4-22; Figur·1 * | 2-4 | |

**RECHERCHIERTE SACHGEBIETE (Int. Cl.4)**

G 05 D 16/00
F 16 K 31/00
F 23 N 5/00

-----------------

XDeKvbHiXgeXdeYHeXHeXkchenXerXeXAlXwXrdeX XuKaüX XatenXanspXuXkeveXsXenK

| Recherchenort | Abschlußdatum der Recherche | Prüfer |
|---|---|---|
| BERLIN | 13-09-1986 | BEITNER |

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## ☒ MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche 1-4: Gasdruckregler mit Servoregler und elektrodynamisch gesteuertem Pilotventil

2. Patentansprüche 5-7: Gasdruck-Differenzregler mit Servoregler und hydraulisch gesteuertem Pilotventil

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche:      1-4